Europäisches Patentamt

European Patent Office

Office européen des brevets

(11) Publication number: **0 116 463**
**B1**

# EUROPEAN PATENT SPECIFICATION

(45) Date of publication of patent specification: 01.06.88

(51) Int. Cl.⁴: **G 11 B 33/14**

(21) Application number: 84300799.8

(22) Date of filing: 08.02.84

(54) **Cassette tape player.**

(30) Priority: 08.02.83 JP 17935/83 u
19.02.83 JP 23589/83 u

(43) Date of publication of application:
22.08.84 Bulletin 84/34

(45) Publication of the grant of the patent:
01.06.88 Bulletin 88/22

(84) Designated Contracting States:
AT DE FR GB NL

(56) References cited:
DE-A-2 443 122
DE-A-3 017 196
FR-A-2 452 852
GB-A- 451 222
GB-A-1 483 767

(73) Proprietor: **SONY CORPORATION**
**7-35 Kitashinagawa 6-Chome Shinagawa-ku**
**Tokyo 141 (JP)**

(72) Inventor: **Iwasawa, Susumu c/o Patent Division**
**Sony Corporation 7-35, Kitashinagawa 6-chome**
**Shinagawa-ku Tokyo (JP)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates generally to cassette tape players such as those which are miniaturized and light in weight so that they are handy to carry, and more particularly to a portable cassette tape player which has an exterior case capable of being put in a waterproof and dustproof condition and being controllable to make it perform a desired operation with the exterior case in the waterproof and dustproof condition.

A cassette tape player which works with a usual compact cassette tape and has the dimensions of an exterior case miniaturized to be slightly larger than the external dimensions of a cassette of the compact cassette tape except a thickness thereof, is often used outdoors as a portable apparatus. Such a cassette tape player as often used outdoors may frequently be put in situations wherein water and dust are likely to enter the exterior case thereof and there is the possibility of troubles and abnormal operation resulting from water and dust entering the exterior case.

Containers are known from GB—A—451 222 and DE—A—2 443 122 which have separate parts which can be brought together and which have a flexible sealing member mounted in a groove in one of the parts whereby a joint between the two parts is sealed when a portion of the other of the parts presses against the flexible sealing member mounted in the groove in the one of the parts.

According to the invention there is provided a cassette tape player having an exterior case which comprises a first structural member containing a major part of an internal mechanism including a driving device for driving a cassette tape and a second structural member engaged with the first structural member and openable and closable with respect thereto, wherein the first member has a first sealing face thereon and the second member has a second sealing face thereon, the second sealing face lies adjacent to the first sealing face when the second member is closed onto the first member, and an elastic seal member is located in a groove in one of the first and second sealing faces such that it lies between the first and second sealing faces to seal up the exterior case when the second member is closed onto the first member, characterised by a limiting member received in the groove and dimensioned so as to be abutted by the other of the first and second sealing faces upon closing of the exterior case thereby to prevent the elastic seal member from being excessively deformed between the first and second sealing faces.

In the case where the exterior case is provided with some adjusting buttons or the like and jacks connected with the internal mechanism, additional elastic seal members may be attached so as to seal up portions of the adjusting buttons or the like and the jacks.

One embodiment of a cassette tape player according to the invention has an exterior case which comprises such first and second members and an elastic seal member as mentioned above and further is provided with a control panel portion comprising openings formed at the positions of control buttons or the like, which are usable for controlling an internal mechanism from the outside of the exterior case while it is in the waterproof and dustproof condition, in a flat plane of one of the first and second members and an elastic plate member which has control portions corresponding to the openings, respectively, and a flat portion extending to surround the control portions and attached to the flat plane of one of the first and second members with a thermocompressible adhesive film between the flat portion of the elastic plate member and the flat plane.

Thus, not only can water and dust be effectively and certainly shut out, but dew condensation caused at the inside of the exterior case due to temperature difference between the inside and the outside of the exterior case can be avoided.

The control panel portion formed on the exterior case and having the control buttons or the like connected with the internal mechanism can be also sealed up surely with a relatively simple configuration without spoiling workability and durability of the control buttons or the like.

The invention is diagrammatically illustrated by way of example with reference to the accompanying drawings, in which:

Figure 1 is a perspective view showing one embodiment of a cassette tape player according to the invention;

Figure 2 is a fragmental perspective view of a portion of the player of Figure 1 used for explaining the construction and operation of a latch;

Figure 3 is a fragmentary sectional view of a portion of the player of Figure 1 showing an elastic seal member;

Figures 4, 5 and 6 are fragmentary sectional views of portions of the player of Figure 1, respectively, used for explaining sealing arrangements for a rotary adjustment button, an opening provided for a jack and an opening provided for a jack used to be connected with an external power source and for adjusting pressure in an exterior case;

Figure 7 is a perspective view showing the exterior other side of the player of figure 1;

Figure 8 is en exploded view in perspective of a control panel portion shown in Figure 7;

Figure 9 is a section taken on line VIII—VIII in Figure 7; and

Figure 10 is a fragmentary section of a thermocompressible adhesive film shown in Figure 9.

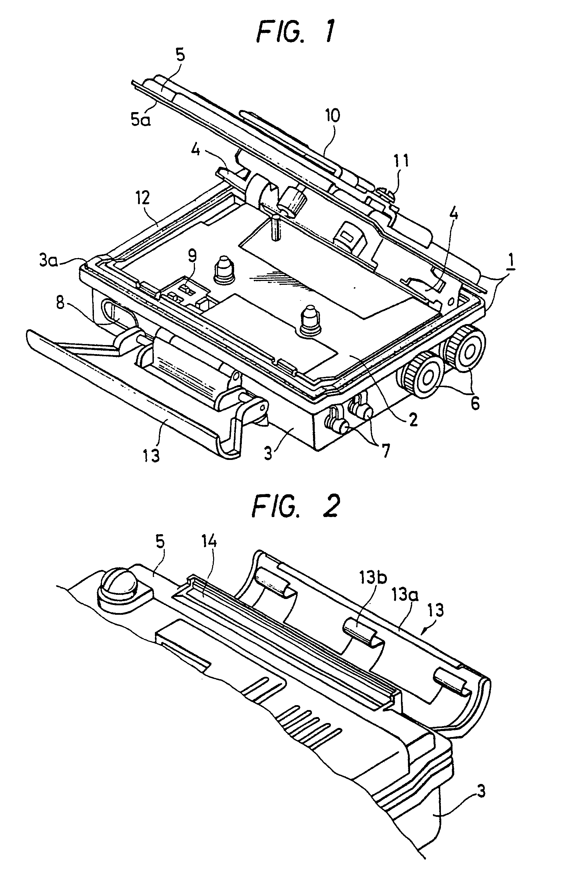

Referring to the drawings and firstly to Figure 1, a cassette tape player has an exterior case 1 made of a plastics material. The exterior case 1 is formed by a body member 3 which contains a major part 2 of an internal mechanism including a driving device for driving a cassette tape, a device serving as a radio receiver and so on, and a lid member 5 which is provided with a cassette holder 4 and is engaged by way of a hinge with the body member 3 so that the case 1 can be opened and closed. A tape cassette (not shown) can be loaded into and unloaded from the cassette holder 4 of the lid member 5 when the case is open.

On side walls of the body member 3, rotary adjustment buttons 6, jack portions 7 and an opening 8 for a jack to be connected to an external power source and for adjusting internal pressure are provided. A hook member 10 to be used for hanging the cassette tape player from a belt is detachably secured on the lid member 5 by a screw 11.

The body member 3 and the lid member 5 have at their peripheral edges respectively sealing faces 3a and 5a which move into close proximity with one another when the lid member 5 is closed, and an elastic seal member 12 is attached to the sealing face 3a of the body member 3 so as to lie in a closed loop on the sealing face 3a. The elastic seal member 12 is located between the sealing face 3a of the body member 3 and the sealing face 5a of the lid member 5 when the lid member 5 is closed. Further, a latch 13 is attached to the side wall of the body member 3 so as to be used to press the lid member 5 against the body member 3 with the interposition of the elastic seal member 12 between the sealing faces 3a and 5a, when the lid member 5 is closed. As shown in Figure 2, the latch 13 comprises an exterior member 13a made of a plastics material and a contacting plate 13b made of metal and provided at the inside of the exterior member 13a. The contacting plate 13b engages in a recessed member 14 made of metal and fixed on the lid member 5 when the binding member 13 is operated. The free end portion of the contacting plate 13b is formed as plate springs and these plate springs engage the recessed member 14 with resilience so that the lid member 5 and the body member 3 are tightly bound together. Since the recessed member 14 is made of metal, the lid member 5 is not damaged by the contacting plate 13b.

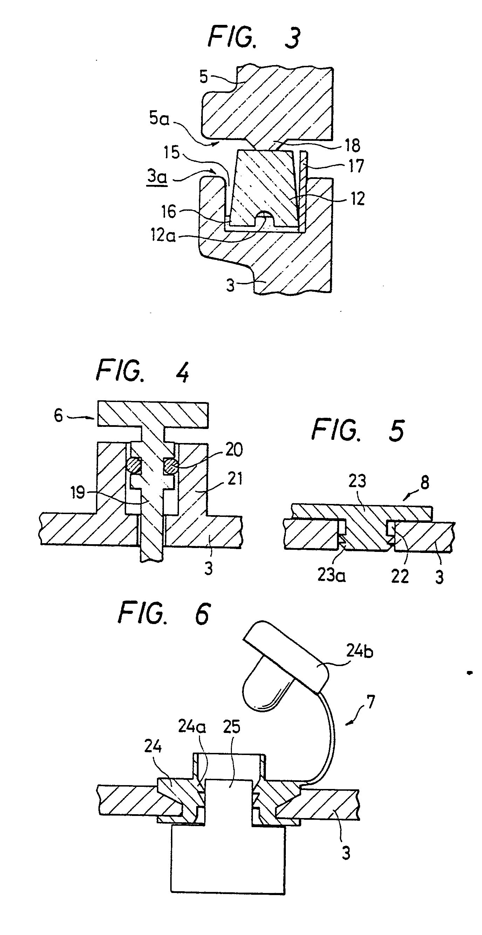

The elastic seal member 12, which is preferably made of flexible silicone rubber is located in a groove 15 formed in the sealing face 3a of the body member 3 and fixed with a silicone rubber adhesive agent 16, as shown in Figure 3. The elastic seal member 12 has a cutout groove 12a at its bottom so as to be able to have appropriate stiffness in case of elastic deformation thereof. When the elastic seal member 12 is compressed by the sealing face 5a of the lid member 5, the cutout groove 12a allows the elastic seal member 12 to be deformed easily and this results subtantially in that the elastic seal member 12 has reduced stiffness. Accordingly, it is possible to cause the elastic seal member 12 to have suitable stiffness by selecting the dimension of the cutout groove 12a.

A limiting plate 17 made of, for example, metal is provided in the groove 15 so as to prevent the elastic seal member 12 from being excessively compressed. If the elastic seal member 12 were to be compressed too much, an undesirable permanent deformation of the elastic seal member 12 could be caused. Accordingly, in this example, for the purpose of avoiding such an undesirable permanent deformation of the elastic seal member 12, the limiting plate 17 is provided at a position opposite to a portion of the sealing face 5a of the lid member 5. The limiting plate 17 is operative to abut the sealing face 5a of the lid member 5 and limit the movement of the sealing face 5a towards the sealing face 3a of the body member 3, thereby to prevent the elastic seal member 12 from being excessively compressed and to keep the elastic seal member 12 in the condition where a suitable sealing force is applied uniformly over the whole thereof. The sealing face 5a of the lid member 5 incorporates a projecting rib 18 extending in a closed loop and to engage the elastic seal member 12.

Although the elastic seal member 12 is attached to the body member 3 in the illustrated embodiment, it is obviously possible to attach the elastic seal member 12 to the lid member 5 if preferred. Further, although the lid member 5 is provided with a cassette holder 4, it is also possible to modify the exterior case so that a tape cassette is loaded into the body member 3 and the lid member 5 acts as a mere lid.

Sealing arrangements for the portions provided with the rotary adjustment buttons 6, the jack portions 7 and the opening portion 8 for the jack used to be connected to the external power source and for adjusting internal pressure will be explained hereinafter with reference to Figures 4, 5·and 6.

As shown in Figure 4, the rotary adjustment button 6 has a shaft 19 provided with a sealing ring member 20 made of rubber or the like and is inserted in a cylindrical boss 21 projecting from the body member 3. The sealing ring member 20 thus provided comes into tight contact with the inner surface of the cylindrical boss 21 so as to seal the inside of the cylindrical boss 21. The inner surface of the cylindrical boss 21 is greased to ensure the seal thereat.

An opening 8 for a jack to be connected to the external power source and for adjusting internal pressure comprises a passage 22 formed in the body member 3 and a rubber plug 23 is inserted into the passage 22, as shown in Figure 5. The rubber plug 23 has flexible projections 23a formed as rings around its body. These flexible projections 23a of the rubber plug 23 come into contact with the inner surface of the passage 22 to seal up the same.

Further, at the jack portion 7, a rubber packing 24 with an opening therein is mounted on the body member 3 and a waterproof jack 25 is inserted into the opening of the rubber packing 24, as shown in Figure 6. The opening of the rubber packing 24 is provided on its inner surface with ring-shaped flexible projections 24a which come into contact with the outer surface of the waterproof jack 25 to seal the inside of the rubber packing 24. In this example, a rubber plug 24b is attached to the rubber packing 24 by a strap and can be inserted into the opening of the rubber packing 24 when a plug, such as a headphone plug, is not inserted into the waterproof jack 25.

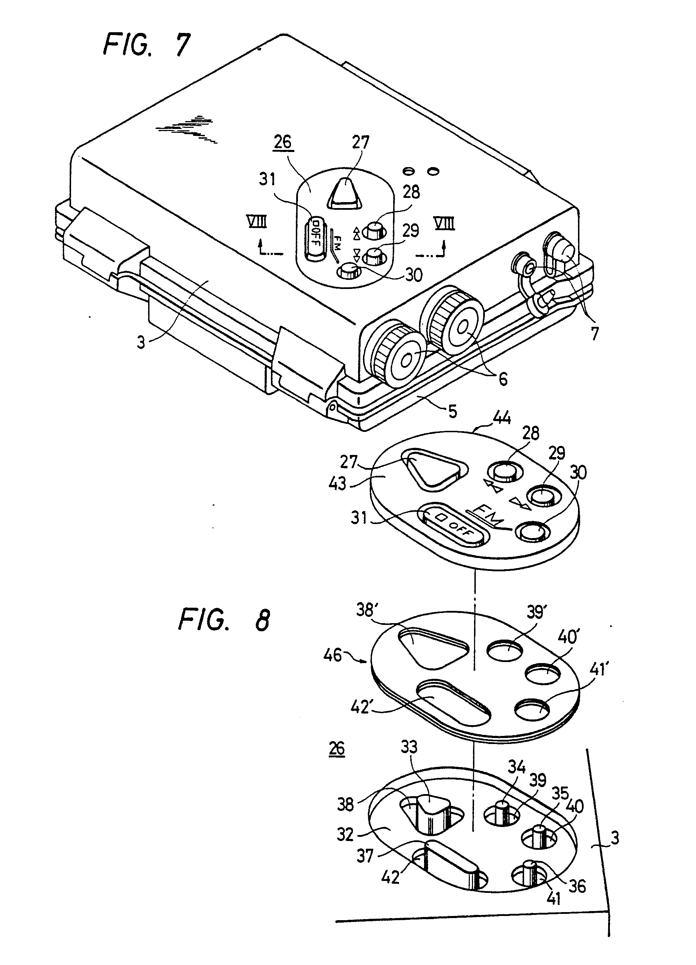

Figure 7 shows the large side of the body member 3 which is not visible in Figure 1. This side of the body member 3 is provided with a control panel 26 which has a forwar control button portion 27, a fast-forward control button portion 28, a rewinding control button portion 29, a radio control button portion 30 and a stop control button portion 31 located at positions corresponding to a forward button (FWD button) used for obtaining a normal reproducing operation mode, a fast-forward button (FF button) used for obtaining a fast-forward operation mode, a rewinding button (REW button) used for obtaining a rewinding operation mode, a radio button used for causing a radio receiver to be operative and a stop button used for releasing each of the above mentioned buttons from its operating stage, respectively. In this example, each of five buttons as aforementioned is formed into a push button. When one of the FWD button, FF button, REW button and radio button is pushed in through the corresponding one of the forward control button portion 27, fast-forward control button portion 29, rewinding control button portion 29 and radio control button portion 30, it is retained in the pushed in state to make the respective operation mode or condition, and when the stop button is pushed in through the stop control button portion 31, the operation mode or condition previously obtained by pushing in the selected one of the FWD button, FF button, REW button and radio button is released.

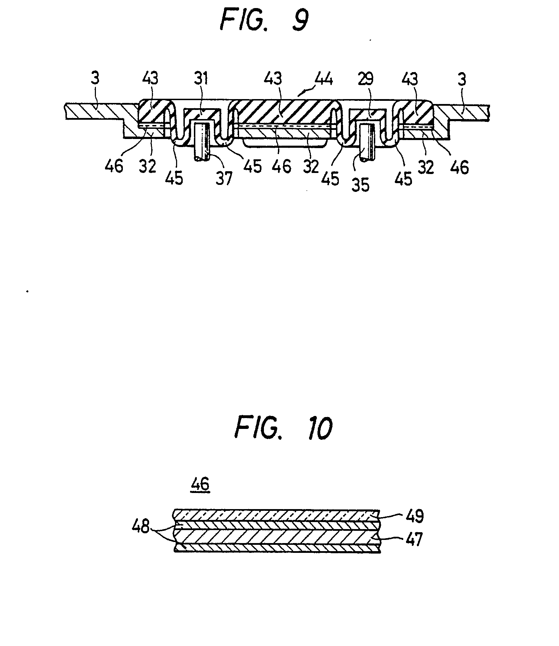

The control panel 26 is constituted as shown in Figure 8 which shows an exploded view in perspective of the control panel 26 and in Figure 9 which shows a sectional view on line VIII—VIII in Figure 7. As shown in these Figures, openings 38, 39, 40, 41 and 42 are formed at the positions corresponding to the FWD button 33, FF button 34, REW button 35, radio button 36 and stop button 37, respectively, in a flat depression 32 provided on the flat plate portion of the body member 3, and the top ends of the FWD button 33, FF button 34, REW button 35, radio button 36 and stop button 37 project toward the outside through the openings 38, 39, 40, 41 and 42, respectively.

An elastic plate member 44 comprises the forward control button portion 27, fast-forward control button portion 28, rewinding control button portion 29, radio control button portion 30 and stop control button portion 31 formed in a body together with a flat portion 43 extending to surround each control button portion, and with its contour coincident with the contour of the flat depression 32. This elastic plate member 44 is made of, for example, a mixture of acrylonitrile-butadiene rubber (NBR) ånd polyvinyl chloride (PVC). The forward control button portion 27, fast-forward control button portion 28, rewinding control button portion 29, radio control button portion 30 and stop control button portion 31 are so disposed as to be in positions corresponding to the openings 38, 39, 40, 41 and 42 formed in the flat depression 32, respectively, and each of the control button portions 27, 28, 29, 30 and 31 is held by a flexible bent portion 45 extending from the flat portion 43 so as to be easily pushed down and then put back to its place by elastic force of the flexible bent portion 45. Each of the control portions 27, 28, 39, 40 and 31 has its top surface arranged to be slightly lower than the upper surface of the flat portion 43 so as not to be pushed down undesirably. The upper surface of the flat portion 43 and some of the top surfaces of the control portions 27, 28, 39, 30 and 31, for example, the top surface of the stop control button portion 31 are provided with indications (deltas, "FM", "OFF") concerning the respective buttons.

Furthermore, a thermocompressible adhesive film 46 provided with openings 38', 40', 40', 41' and 42' corresponding to the openings 38, 39, 40, 41 and 42 formed in the flat depression 32, respectively, and having its contour coincident with the contour of the flat depression 32, is provided. This thermocompressible adhesive film 46 comprises, for example as shown in Figure 10, a thin polyethylene sheet 47, having its opposite sides covered by layers 48 and NBR adhesive agent, and a layer 49 of styrene-butadiene rubber (SBR) adhesive agent covering one of the layers 48 of NBR adhesive agent.

The thermocompressible adhesive film 46 is placed between the upper surface of the flat depression 32 and the under surface of the flat portion 43 of the elastic plate member 44 in such a manner that the layer 48 of the NBR adhesive agent comes into contact with the flat depression 32 and the layer 49 of SBR adhesive agent comes into contact with the flat portion 43 of the elastic plate member 44, and the flat portion 43 of the elastic plate member 44 is bonded to the flat depression 32 by heat and pressure (for example, heating to 120 degrees centigrade and pressurization to 3 to 3.5 Kg/cm$^2$), so that the elastic plate member 44 is attached to the body member 3. With a view to making the elastic plate member 44 be attached securely, it is preferable to clean the elastic plate member 44 with halogen gas in order to extract oil from the same or to sandblast the under surface of the flat portion 43 of the elastic plate member 44, before the elastic plate member 44 is attached to the body member 3. In the state of the elastic plate member 44 attached to the body member 3, the forward control button portion 27, fast-forward control button portion 28, rewinding control button portion 29, radio control button portion 30 and stop control button portion 31 of the elastic plate member 44 are positioned to cover respectively the top ends of the FWD button 33, FF button 34, REW button 35, radio button 36 and stop button 37 projected respectively through the openings 38, 39, 40, 41 and 42 formed in the flat depression 32.

In such a manner as described above, the elastic plate member 44 is attached to the body member 3 having the openings 38, 39, 40, 41 and 42 at the positions corresponding to the FWD button 33, FF button 34, REW button 35, radio button 36 and stop button 37, respectively, so that the FWD button 33, FF button 34, REW button 35, radio button 36 and stop button 37 can be controlled through the respective control button portions 27, 28, 29, 30 and 31 provided on the elastic plate member 44, at the control panel 26. In the control panel 26 thus constituted, the openings 38, 39, 40, 41 and 42 formed in the flat depression 32 of the body member 3 are covered by the respective control button portions 27, 28, 29, 30 and 31 with the flexible bent portions 45 therearound of the elastic plate member 44 which is bonded to the flat depression 32 with the thermocompressible adhesive film 46. In that case, since the thermocompressible adhesive film 46 is securely bonded to the upper surface of the flat depression 32 with the layer 48 of NBR adhesive agent and the under surface of the flat portion 43 of the elastic plate member 44 is securely bonded to the thermocompressible adhesive film 46 with the layer 49 of the SBR adhesive agent, since the layer 48 of NBR adhesive agent is highly waterproof, the control panel 26 is sufficiently sealed to prevent water and dust from entering the body member 3.

The shape of the exterior case 1 of the cassette tape player can be varied widely without departing from the invention and other modifications can obviously be made, for example the cassette tape player may be able to perform not only reproducing operations but also recording operations, and the cassette tape player need not include a radio receiver.

**Claims**

1. A cassette tape player having an exterior case (1) which comprises a first structural member (3) containing a major part of an internal mechanism including a driving device for driving a cassette tape and a second structural member (5) engaged with the first structural member and openable and closable with respect thereto, wherein the first member (3) has a first sealing face (3a) thereon and the second member (5) has a second sealing face (5a) thereon, the second sealing face (5a) lies adjacent to the first sealing face (3a) when the second member (5) is closed onto the first member (3), and an elastic seal member (12) is located in a groove (15) in one of the first and second sealing faces (3a, 5a) such that it lies between the first and second sealing faces to seal up the exterior case (1) when the second member (5) is closed onto the first member, characterised by a limiting member (17) received in the groove (15) and dimensioned so as to be abutted by the other of the first and second sealing faces (3a, 5a) upon closing of the exterior case (1) thereby to prevent the elastic seal member (12) from being excessively deformed between the first and second sealing faces (3a, 5a).

2. A cassette tape player according to claim 1, characterised by a cutout groove (12a) in the bottom face of the elastic seal member (12).

3. A cassette tape player according to claim 1 or claim 2, characterised in that the elastic seal member (12) is attached to only one of the first and second sealing faces (3a, 5a) and the other of the first and second sealing faces (3a, 5a) is provided with a projecting rib extending therearound.

4. A cassette tape player according to any one of claims 1 to 3, characterised in that the elastic seal member (12) is made of silicone rubber.

5. A cassette tape player according to any one of claims 1 to 4, characterised in that the exterior case (1) is provided with a control panel portion (26) comprising a flat plane portion (32) of one of said first and second members (3, 5) having therein at least one opening (38 to 42) formed at a position corresponding to control means such as a button (33 to 37) provided to be used for controlling thereby the internal mechanism from the outside of the exterior case, an elastic plate member (44) having at least one control portion (27 to 31) arranged to be placed at a position corresponding to said opening (38 to 42) and a flat portion (32) extending to surround said control portion (27 to 31), said control portion (27 to 31) and flat portion (43) being formed in a body, and a thermocompressible adhesive film (46) is provided between said flat plane portion (32) and said elastic plate member (43) for bonding said flat portion (43) of the elastic plate member (44) to said first plane portion (32) of one of the first and second members (3, 5).

6. A cassette tape player according to claim 5, characterised in that the thermocompressible adhesive film (46) is provided with a layer (48) of acrylonitrile-butadiene rubber adhesive agent on the side facing to the flat plane portion of one of the first and second members (3, 5).

7. A cassette tape player according to claim 5 or claim 6, characterised in that said thermocompressible adhesive film is provided with a layer (49) of styrene-butadiene rubber adhesive agent on the side facing to said flat portion (43) of the elastic plate member (43).

8. A cassette tape player according to any one of claims 1 to 7, characterised in that the exterior case (1) further comprises an additional elastic seal member (20) provided in a supporting portion (21) formed on one of the first and second members (3, 5) and having an opening in which a portion of a rotary adjustment button (6) is inserted, so as to seal up said opening.

9. A cassette tape player according to claim 8, characterised in that the additional elastic seal member (20) is put between the inner surface of said opening and said portion of the rotary adjustment button, and said inner surface of said opening is greased to ensure the seal thereat.

10. A cassette tape player according to any one of claims 1 to 9, characterised in that the exterior case (1) further comprises an additional elastic seal member (23) inserted detachably into an opening (22) formed in one of the first and second members (3, 5) for adjusting internal pressure.

11. A cassette tape player according to any one of claims 1 to 10, characterised in that the exterior case further comprises an additional elastic seal member (24) for sealing up an opening provided at a position corresponding to a jack (25) connected with the internal mechanism.

**Patentansprüche**

1. Gerät für Bandkassetten, mit einem äußeren Gehäuse (1), das aus einem ersten Konstruktionsteil (3), welches einen Hauptteil eines internen Mechanismus enthält, der eine Antriebseinrichtung zum Antreiben eines Kassettenbandes aufweist, und einem zweiten Konstruktionsteil (5) besteht, das mit dem ersten Konstruktionsteil in Eingriff steht und in bezug auf dieses zu öffnen und zu schließen ist, wobei das erste Konstruktionsteil (3) eine erste Dichtungsfläche (3a) auf sich aufweist und das zweite Konstruktionsteil (5) eine zweite Dichtungsfläche (5a) auf sich aufweist, die zweite Dichtungsfläche (5a) zu der ersten Dichtungsfläche (3a) benachbart angeordnet ist, wenn das zweite Konstruktionsteil (5) im geschlossenen Zustand des Gehäuses auf dem ersten Konstruktionsteil (3) liegt, und ein elastisches Dichtungsteil (12) in einer Nut (15) in der ersten oder der zweiten Dichtungsfläche (3a, 5a) derart angeordnet ist, daß es zwischen der ersten und der zweiten Dichtungsfläche liegt, um das äußere Gehäuse (1) abzudichten, wenn das zweite Konstruktionsteil (5) im geschlossenen Zustand des Gehäuses auf das erste Konstruktionsteil (5) gelegt ist, gekennzeichnet durch ein Begrenzungsteil (17), das von der Nut (15) aufgenommen ist und so dimensioniert ist, daß die andere der ersten und zweiten Dichtungsflächen (3a, 5a) aufgrund des Schliessens des äußeren Gehäuses (1) gegen dieses stößt, um dadurch zu verhindern, daß das elastische Dichtungsteil (12) übermäßig zwischen der ersten und der zweiten Dichtungsfläche (3a, 5a) verformt wird.

2. Gerät für Bandkassetten nach Ansprüche 1, gekennzeichnet durch eine Ausnehmung (12a) in der Unterseite des elastischen Dichtungsteils (12).

3. Gerät für Bandkassetten nach Anspruch 1 oder 2, dadurch gekennzeichnet, daß das elastische Dichtungsteil (12) nur an einer der ersten und zweiten Dichtungsflächen (3a, 5a) angebracht ist und die andere der ersten und zweiten Dichtungsflächen (3a, 5a) mit einer vorstehenden Rippe versehen ist, die sich um die Dichtungsfläche herum erstreckt.

4. Gerät für Bandkassetten nach einem der Ansprüche 1 bis 3, dadurch gekennzeichnet, daß das elastische Dichtungsteil (12) aus Silikongummi hergestellt ist.

5. Gerät für Bandkassetten nach einem der Ansprüche 1 bis 4, dadurch gekennzeichnet, daß das äußere Gehäuse (1) mit einem Bedienungsfeld (26) versehen ist, das einen flachen ebenen Abschnitt (32) eines der ersten und zweiten Konstruktionsteile (3, 5), der in sich zumindest eine Öffnung (38 bis 42) enthält, die in einer Position ausgebildet ist, welche mit einem Steuermittel, beispielsweise einem Knopf (33 bis 37), korrespondiert, das zur Benutzung zum Steuern des internen Mechanismus von der Außenseite des äußeren Gehäuses her vorgesehen ist, ein elastisches Plattenteil (44), das zumindest einen Steuerteil (27 bis 31) hat, der so angeordnet ist, daß er mit der Öffnung (38 bis 42) korrespondiert, und einen flachen Teil (32) aufweist, der sich erstreckt, um den Steuerteil (27 bis 31) zu umgeben, wobei der Steuerteil (27 bis 31) und der flache Teil (43) in einem Körper ausgebildet sind, und daß eine wärmeverdichtbare Klebfolie (46) zwischen dem flachen ebenen Abschnitt (32)) und dem elastischen Plattenteil (44) zum Verbinden des flachen Teils (43) des elastischen Plattenteils (44) mit dem ebenen Abschnitt (32) eines der ersten und zweiten Konstruktionsteile (3, 5) vorgesehen ist.

6. Gerät für Bandkassetten nach Anspruch 5, dadurch gekennzeichnet, daß die wärmeverdichtbare Klebfolie (46) mit einer Schicht (48) aus Akrylnitril-Butadiengummi-Klebmittel auf der Seite versehen ist, die dem flachen ebenen Abschnitt eines der ersten und zweiten Konstruktionsteile (3, 5) gegenüberliegt.

7. Gerät für Bandkassetten nach Anspruch 5 oder 6, dadurch gekennzeichnet, daß die wärmeverdichtbare Klebfolie (46) mit einer Schicht (49) aus Styrol-Butadiengummi-Klebmittel auf der Seite versehen ist, die dem flachen Teil (43) des elastischen Plattenteils (44) gegenüberliegt.

8. Gerät für Bandkassetten nach einem der Ansprüche 1 bis 7, dadurch gekennzeichnet, daß das äußere Gehäuse (1) desweiteren ein zusätzliches elastisches Dichtungsteil (20) enthält, welches in einem Halteabschnitt (21) vorgesehen ist, der auf einem der ersten und zweiten Konstruktionsteile (3, 5) ausgebildet ist und eine Öffnung hat, in welche ein Abschnitt eines drehbaren Einstellknopfes (6) eingesetzt ist, um auf diese Weise die Öffnung abzudichten.

9. Gerät für Bandkassetten nach Anspruch 8, dadurch gekennzeichnet, daß das zusätzliche elastische Dichtungsteil (20) zwischen die innere Oberfläche der Öffnung und den Abschnitt des drehbaren Einstellknopfes eingesetzt ist und daß die innere Oberfläche der Öffnung eingefettet ist, um deren Abdichtung sicherzustellen.

10. Gerät für Bandkassetten nach einem der Ansprüche 1 bis 9, dadurch gekennzeichnet, daß das äußere Gehäuse (1) desweiteren ein zusätzliches elastisches Dichtungsteil (23) enthält, das entfernbar in eine Öffnung (22) eingesetzt ist, die in einem der ersten und zweiten Konstruktionsteile (3, 5) zum Einstellen eines inneren Drucks ausgebildet ist.

11. Gerät für Bandkassetten nach einem der Ansprüche 1 bis 10, dadurch gekennzeichnet, daß das äußere Gehäuse desweiteren ein zusätzliches elastisches Dichtungsteil (24) zum Abdichten einer Öffnung enthält, die in einer Position vorgesehen ist, welche mit einer Steckerbuchse (correspondiert, die mit dem internen Mechanismus verbunden ist.

## Revendications

1. Lecteur de bande magnétique en cassette ayant un boîter externe (1) qui comporte un premier organe résistant (3) contenant la plus grande partie d'un mécanisme interne, comprenant un dispositif d'entraînement d'une bande magnétique en cassette, et un second organe résistant (5) coopérant avec le premier organe résistant et qui peut être ouvert et fermé par rapport à celui-ci, dans lequel le premier organe (3) a une première face d'étanchéité (3a) et le second organe (5) a une seconde face d'étanchéité (5a), la seconde face d'étanchéité (5a) étant adjacente à la première (3a) lorsque le second organe (5) est fermé sur le premier organe (3), et une organe élastique d'étanchéité (12) est placé dans une gorge (15) formée dans l'une des première et seconde faces d'étanchéité (3a, 5a) de manière qu'il soit disposé entre la première et la seconde face d'éthanchéité et ferme de manière étanche le boîtier externe (1) lorsque le second organe (5) est fermé sur le premier, caractérisé par un organe (17) de limitation logé dans la gorge (15) et ayant des dimensions telles qu'il est en butée contre l'autre des première et seconde faces d'étanchéité (3a, 5a) après fermeture du boîtier externe (1), si bien que l'organe élastique d'étanchéité (12) ne peut pas être déformé excessivement entre la première et la seconde face d'étanchéité (3a, 5a).

2. Lecteur de bande magnétique en cassette selon la revendication 1, caractérisé par une gorge découpée (12a) formée à la face inférieure de l'organe élastique d'étanchéité (12).

3. Lecteur de bande magnétique en cassette selon l'une des revendications 1 et 2, caractérisé en ce que l'organe élastique d'étanchéité (12) est fixé à l'une des première et seconde faces d'étanchéité (3a, 5a) et l'autre des première et seconde faces d'étanchéité (3a, 5a) comporte une nervure en saillie disposée autour d'elle.

4. Lecteur de bande magnétique en cassette selon l'une quelconque des revendications 1 à 3, caractérisé en ce que l'organe élastique d'étanchéité (12) est formé d'un caoutchouc de silicone.

5. Lecteur de bande magnétique en cassette selon l'une quelconque des revendications 1 à 4, caractérisé en ce que le boîtier externe (1) a une partie (26) formant panneau de commande qui comporte une partie plane (32) de l'une des premier et second organes (3, 5) et ayant au moins une ouverture (38 à 42) formée à un emplacement correspondant à un dispositif de commande tel qu'un bouton (33 à 37) destiné à être utilisé pour la commande du mécanisme interne depuis l'extérieur du boîtier externe, une plaque élastique (44) ayant au moins une partie de commande (27 à 31) destinée à être disposée à un emplacement correspondant à ladite ouverture (38 à 42) et une partie plate (32) destinée à entourer la partie de commande (27 à 31), la partie de commande (27 à 31) et la partie plate (43) étant formées dans un corps, et un film adhésif thermocompressible (46) disposé entre la partie plane (32) et la plaque élastique (43) et est destiné à fixer la partie plate (43) de la plaque élastique (44) à la première partie plane (32) de l'une des premier et second organes (3, 5).

6. Lecteur de bande magnétique en cassette selon la revendication 5, caractérisé en ce que le film adhésif thermocompressible (46) a une couche (48) d'un adhésif de caoutchouc d'acrylonitrile-butadiène sur la face tournée vers la partie plane de l'une des premier et second organes (3, 5).

7. Lecteur de bande magnétique en cassette selon l'une des revendications 5 et 6, caractérisé en ce que le film adhésif thermocompressible a une couche (48) d'un adhésif de caoutchouc de butadiène-styrène sur le côté tourné vers la partie plate (43) de la plaque élastique (43).

8. Lecteur de bande magnétique en cassette selon l'une quelconque des revendications 1 à 7, caractérisé en ce que le boîtier externe (1) comporte en outre un organe élastique supplémentaire (20) d'étanchéité placé dans une partie de support (21) formée sur l'un des premier et second organes (3, 5) et ayant une ouverture dans laquelle est introduite une partie d'un bouton rotatif (6) de réglage, afin que l'ouverture soit fermée de manière étanche.

9. Lecteur de bande magnétique en cassette selon la revendication 8, caractérisé en ce que l'organe élastique supplémentaire (20) d'étanchéité est placé entre la surface interne de l'ouverture et la partie de bouton rotatif de réglage, et la surface interne de l'ouverture est graissée afin que l'étanchéité y soit bonne.

10. Lecteur de bande magnétique en cassette selon l'une quelconque des revendciations 1 à 9, caractérisé en ce que le boîtier externe (1) comporte en outre un organe élastique supplémentaire (23) d'étanchéité introduit de façon temporaire dans une ouverture (22) formé dans l'une des premier et second organes (3, 5) afin qu'il permette le réglage de la pression interne.

11. Lecteur de bande magnétique en cassette selon l'une quelconque des revendications 1 à 10, caractérisé en ce que le boîtier externe comporte en outre un organe élastique supplémentaire (24) d'étanchéité destiné à fermer de manière étanche une ouverture ayant un emplacement correspondant à un connecteur (25) relié au mécanisme interne.

## FIG. 1

## FIG. 2

## FIG. 3

5
5a
15
3a
16
12a
18
17
12
3

## FIG. 4

6
19
20
21
3

## FIG. 5

23
8
23a
22
3

## FIG. 6

24b
24a
25
24
7
3

FIG. 7

FIG. 8

## FIG. 9